Europäisches Patentamt

(19) European Patent Office

Office européen des brevets

(11) **EP 0 929 599 B1**

(12) **EUROPÄISCHE PATENTSCHRIFT**

(45) Veröffentlichungstag und Bekanntmachung des Hinweises auf die Patenterteilung:
**05.12.2001 Patentblatt 2001/49**

(21) Anmeldenummer: **97910333.0**

(22) Anmeldetag: **23.09.1997**

(51) Int Cl.⁷: **C08J 5/18**, B29C 55/12

(86) Internationale Anmeldenummer:
**PCT/EP97/05207**

(87) Internationale Veröffentlichungsnummer:
**WO 98/13414 (02.04.1998 Gazette 1998/13)**

(54) **BIAXIAL ORIENTIERTE PET-FOLIE ZUR VERWENDUNG FÜR SMD-FÄHIGE FOLIENKONDENSATOREN, VERFAHREN ZUR HERSTELLUNG DIESER FOLIE UND VERWENDUNG DERSELBEN FÜR FOLIENKONDENSATOREN IN DER SMD-TECHNIK**

BIAXIALLY-ORIENTED PET FOIL FOR USE FOR SMD FOIL CAPACITORS, METHOD FOR THE PRODUCTION OF SAID FOIL AND ITS USE AS FOIL CAPACITORS IN SMD TECHNOLOGY

FEUILLE DE PET A ORIENTATION BIAXIALE A UTILISER POUR CONDENSATEURS A FEUILLES APTES AU MONTAGE EN SURFACE, PROCEDE DE PRODUCTION D'UNE TELLE FEUILLE ET UTILISATION DE CELLE-CI POUR LA CONSTITUTION DE CONDENSATEURS UTILISES DANS LA TECHNIQUE DES CMS

(84) Benannte Vertragsstaaten:
**DE FR GB IT LU NL**

(30) Priorität: **24.09.1996 DE 19639056**
**21.08.1997 DE 19736394**
**21.08.1997 DE 19736398**

(43) Veröffentlichungstag der Anmeldung:
**21.07.1999 Patentblatt 1999/29**

(73) Patentinhaber: **Mitsubishi Polyester Film GmbH**
**65203 Wiesbaden (DE)**

(72) Erfinder:
• **KURZ, Rainer**
**D-65232 Taunusstein (DE)**
• **BURSCH, Annegrete**
**D-65385 Rüdesheim (DE)**

• **HORA, Franz**
**D-65830 Kriftel (DE)**
• **KUHMANN, Bodo**
**D-65594 Runkel (DE)**
• **SCHALLER, Ulrich**
**D-65439 Flörsheim-Wicker (DE)**

(74) Vertreter: **Schweitzer, Klaus, Dr. et al**
**Patentanwaltskanzlei Zounek,**
**Industriepark Kalle-Albert,**
**Gebäude H391**
**Rheingaustrasse 190-196**
**65174 Wiesbaden (DE)**

(56) Entgegenhaltungen:
**EP-A- 0 402 861        US-A- 3 683 060**
**US-A- 4 042 569        US-A- 4 985 537**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft Polyesterfolien, insbesondere PET-Folien, die aufgrund ihrer verbesserten Schrumpfeigenschaften sich besonders zur Herstellung von Kondensatoren für die SMD-Technik eignen. Insbesondere für Kondensatoren, die in der SMD-Technik verwendet werden, benötigt man Folien mit geringer Dicke und Temperaturbeständigkeit. Dies bringt Vorteile bei der Raumnutzung des Kondensators und beim Lötvorgang.

Eingesetzt werden zur Zeit PEN- und PPS-Folien für Folienkondensatoren in der SMD-Technik. PEN- und PPS-Folien haben einen deutlich höheren Schmelzpunkt, PEN ca. 265 °C und PPS ca. 285 °C, als PET-Folien (ca. 255 °C), und haben deshalb eine andere Schrumpfcharakteristik. Von entscheidendem Nachteil sind jedoch die hohen Kosten solcher PEN- und PPS-Folien. Es ist bekannt, daß z.Zt. auf dem Markt erhältliche PET-Folien zur Herstellung von Kondensatoren für die SMD-Technik nicht oder nur sehr bedingt unter besonderen Randbedingungen, wie z.B. mit Kapsel oder bei Reduktion der maximal erlaubten Löttemperaturen auf ca. 200 °C geeignet sind. Die PET-Kondensatoren sind nach der zur Herstellung benötigten Temperung mechanisch instabil.

Damit PET-Folien die benötigte Wärmestabilität besitzen, muß der Schrumpf besonders in Querrichtung bei hohen Temperaturen so weit abgebaut werden, daß die Herstellung der Kondensatoren gelingt und daß die Lötbadbeständigkeit der Kondensatoren gegeben ist.

Nach JP-B-63/004499 (Toray) werden biaxial orientierte Polyesterfolien mit niedrigen Schrumpfwerten dadurch eingestellt, daß zusätzlich ein weiterer Wärmebehandlungsschritt durchgeführt wird.

In EP-A-0 402 861 (DHC) und JP-A-63/011326 (Toray) werden Folien mit einem sehr niedrigen Längsschrumpf beschrieben. Beschrieben wird in EP-A-0 402 861 ein erster Temperschritt bei 225 °C bis 260 °C mit einer Relaxation von 1 bis 15 % und anschließender, zweiter Relaxation von 0,01 bis 10 % bei Temperaturen unterhalb von 180 °C. Diese Folien sind deshalb nachteilig, weil der dort beschriebene Längsschrumpf so gering ist, daß die daraus hergestellten Kondensatoren nicht genug verfestigt sind. Daraus resultiert ein schlechter Isclationswiderstand.

Aufgabe der vorliegenden Erfindung war es nun, eine SMD-taugliche PET-Folie zur Verfügung zu stellen. Die Folie soll einen sehr niedrigen Querschrumpf auch bei hohen Temperaturen aufweisen, damit die daraus hergestellten Kondensatoren nach der Temperung mechanisch stabil sowie lötbadbeständig sind. Außerdem soll die Folie den zur Verfestigung der Kondensatoren benötigten Längsschrumpf aufweisen.

Diese Aufgabe wird gelöst durch eine biaxial orientierte Folie mit einer Dicke von ≤ 12 μm, die folgende Eigenschaften aufweist:

| | |
|---|---|
| Ts (TD) | ≥ 160 ° C |
| S 200 (TD) | ≤ 5 % |
| S 200 (MD) | 2% - 5% |
| Schrumpfkräfteverhältnis $N_S$ 220/$N_S$ 160 | ≥ 4,5 |
| Folienfixierpeak | ≥ 210 °C |
| Foliendichte | 1,39 - 1,41 g/cm$^3$ |

Die Erfindung betrifft dementsprechend eine biaxial orientierte ein- oder mehrschichtige Polyesterfolie, die ein- oder zweiseitig beschichtet sein kann, mit einer Gesamtdikke von ≤ 12 μm, wobei Ts (TD) die Temperatur (°C) ist, bei der der Schrumpf (gemessen mittels TMA-Analyse) in Querrichtung beginnt, S 200 (TD) ist der Schrumpf (%) bei 200 °C in Querrichtung, S 200 (MD) der Schrumpf (%) bei 200 °C in Längsrichtung und $N_S$ 220 die Schrumpfkraft (N) bei 220 °C und $N_S$ 160 die Schrumpfkraft (N) bei 160 °C in Querrichtung. Der Folienfixierpeak ist die maximal erlebte Temperatur der Folie (mittels DSC-Analyse gemessen).

Die Erfindungsgemäße Folie besitzt eine Dicke von ≤ 12 μm, vorzugsweise ≤ 8 μm und insbesondere von ≤ 6 μm.

Die Temperatur (°C) Ts (TD), bei der der Schrumpf in Querrichtung beginnt, muß ≥ 160 °C, bevorzugt ≥ 175 °C sein, um mechanische Deformationen der resultierenden Kondensatoren beim Lötvorgang zu verhindern.

Der Querschrumpf der Folie bei 200 °C ist < 5, bevorzugt < 3 und besonders bevorzugt ≤ 1 %, da sonst der aus dieser Folie hergestellte Kondensator beim Löten zu stark eingeschnürt wird.

Als besonders günstig hat es sich erwiesen, wenn der Querschrumpf der Folie bei 220 °C ist < 5, bevorzugt < 3 und besonders bevorzugt ≤ 2 % ist, da sonst der aus dieser Folie hergestellte Kondensator bei hohen Löttemperaturen zu stark mechanisch deformiert wird.

Das Schrumpfkräfteverhältnis Ns 220/Ns 160 in Querrichtung der erfindungsgemäßen Folie ist ≥ 4,5 %, besonders bevorzugt ≥ 5 %.

Wenn der Längsschrumpf bei 200 °C außerhalb der Spezifikation 2% ≤ x ≤ 5% ist, ist die mechanische Stabilität des aus der Folie hergestellten Kondensators nicht mehr gegeben, wobei sich ein Bereich von 3 % ≤ x ≤ 4 % als besonders günstig erwiesen hat.

Der Folienfixierpeak liegt bei ≥ 210 °C, vorzugsweise ≥ 215 °C und insbesondere ≥ 220 °C. Dies gewährleistet, daß die Folie bei den weiteren Verarbeitungsschritten, deren Temperaturen gewöhnlich im Bereich von 220 bis 250 °C liegen, temperaturstabil bleibt.

Die Dichte des zur Folienherstellung verwendeten Polyesters liegt im Bereich von 1,39 bis 1,41 g/cm$^3$. Wenn dieser Wert oberhalb der Spezifikation liegt, ist die Folie zu kristallin und würde bei der Kondensatorherstellung zu einer Sprödigkeit der Folie und damit zum Ausfall des Kondensators führen. Liegt er unterhalb dieses Bereiches, so ist die thermische Stabilität (Hydrolysestabilität) der Folie zu gering.

Die erfindungsgemäße Folie wird aus Polyesterrohstoffen hergestellt. Unter Polyesterrohrstoffen werden Zusammensetzungen verstanden, die zum überwiegenden Teil, d.h. zu mindestens 80 Gew.-%, bevorzugt mindestens 90 Gew.-%, aus einem Polymer, ausgewählt aus der Gruppe Polyethylenterephthalat (PET), Polyethylennaphthalt (PEN), Poly-1,4-dicyclohexandimethylenterephthalat (PCT), Polyethylennaphthalatbibenzoat (PENBB) und Blends dieser Polymere bestehen. Bevorzugt sind Polyesterrohstoffe, die vorzugsweise im wesentlichen aus Ethylenterephthalateinheiten und/oder vorzugsweise bis 30 Mol-% aus Comonomereinheiten aufgebaut sind, wobei eine Variation in der Glykol- und/oder der Säurekomponente der Comonomereinheiten möglich ist. Die Herstellung der Polyester kann sowohl nach dem Umesterungsverfahren mit den üblichen Katalysatoren, wie z.B. Zn-, Ca-, Li- und Mn-Salzen oder nach dem Direktveresterungsverfahren erfolgen.

Der Polyesterrohstoff enthält gegebenenfalls die zur Herstellung von Kondensatorfolien zur Verbesserung der Schlupf- und Gleiteigenschaften üblichen Additive (Partikel), z.B. anorganische Pigmente wie Kaolin, Talk, $SiO_2$ $MgCO_3$, $CaCO_3$, $BaCO_3$, $CaSO_4$, $BaSO_4$, $LiPO_4$, $Ca_3(PO_4)_2$, $Mg_3(PO_4)_2$, $TiO_2$. $Al_2O_3$, MGO, SiC,LiF oder die Ca-, Ba-, Mn-Salze der Terephthalsäure. Es können allerdings auch Teilchen auf Basis vernetzter, unschmelzbarer, organischer Polymeren wie z.B. Polystyrole, Polyacrylate, Polymethacrylate zugesetzt werden. Bevorzugt werden die Partikel in einer Konzentration von 0,005 bis 5,0 Gew.-%, besonders bevorzugt in einer Konzentration von 0,01 bis 2.0 Gew.-% (bezogen auf das Gewicht der Schicht) eingesetzt. Die durchschnittliche Teilchengröße beträgt 0,001 bis 10 µm, bevorzugt 0,005 bis 5 µm.

Die Polyesterfolien können nach bekannten Verfahren aus oben beschriebenen Rohstoffen oder in Kombination obiger Polyesterrohstoffe mit weiteren Rohstoffen oder üblichen Additiven in üblicher Menge von 0,1 bis maximal 10 Gew.-% sowohl als Monofolien als auch als mehrschichtige, gegebenenfalls coextrudierte Folien mit gleichen oder unterschiedlich ausgebildeten Oberflächen hergestellt werden, wobei eine Oberfläche beispielsweise pigmentiert ist und die andere Oberfläche kein Pigment enthält. Ebenso können eine oder beide Oberflächen der Folie nach bekannten Verfahren mit einer üblichen funktionalen Beschichtung versehen werden.

Bei dem bevorzugten Extrusionsverfahren zur Herstellung der Polyesterfolie wird das aufgeschmolzene Polyestermaterial durch eine Schlitzdüse extrudiert und als weitgehend amorphe Vorfolie auf einer Kühlwalze abgeschreckt. Diesr Folie wird anschließend erneut erhitzt und in Längs- und Querrichtung bzw. in Quer- und in Längsrichtung bzw. in Längs-, in Quer- und nochmals in Längsrichtung und/oder Querrichtung gestreckt. Die Strecktemperaturen liegen im allgemeinen bei $T_g$+10°C bis $T_g$+60°C, das Streckverhältnis der Längsstreckung liegt üblicherweise bei 2 bis 6, insbesondere bei 3 bis 4,5, das der Querstreckung bei 2 bis 5, insbesondere bei 3 bis 4,5 und das der gegebenenfalls durchgeführten zweiten Längsstreckung bei 1,1 bis 3. Die erste Längsstreckung kann gegebenenfalls gleichzeitig mit der Querstreckung (Simultanstreckung) durchgeführt werden. Anschließend folgt die Thermofixierung der Folie bei Ofentemperaturen von 200 bis 260 °C, insbesondere bei 220 bis 250 °C. Entscheidend für die Herstellung der erfindungsgemäßen Folie ist das tatsächliche Temperaturerlebnis der Folie und nicht die Umgebungstemperatur im Herstellungsprozess. Beispielsweise kann bei sehr hoher Geschwindigkeit der Produktionsmaschine die Ofentemperatur, d.h. die Umgebungstemperatur, erheblich über der Temperatur liegen, die die Folie tatsächlich beim Durchlaufen dieses Ofens erfährt. Die maximale Temperatur, die die Folie während ihres Herstellungsprozesses tatsächlich erlebt, läßt sich mittels DSC-Analyse an einer fertigen Folie ermitteln. Diese Temperatur, gemessen mittels DCS-Analyse, ligt bei der erfindungsgemäßen Folie bei ≥ 210 °C, bevorzugt ≥ 215 °C, besonders bevorzugt ≥ 220 °C, entsprechend der beim SMD-Prozeß benutzten Löttemperatur. In der Fixierzone wird die Folie in Querrichtung um insgesamt 5 bis 15% relaxiert. Entscheidend ist neben diser Gesamtrelaxation von 5-15% die Relaxiationsgeschwindigkeit, die erfindungsgemäß bei < 20 % liegt. Dies ist sehr wichtig für die Einstellung des Schrumpfes in Querrichtung. Die Relaxiationsgeschwindigkeit ist der Quotient aus der Relaxation in % und der Zeit in s in der die Relaxation stattfindet.

Die Relaxation kann in mehreren diskreten Schritten, aber auch in einem Schritt erfolgen, wobei die Relaxation in mehreren Schritten, insbesondere über eine längere Strecke bevorzugt wird. Besonders günstig ist dabei eine Relaxationsgeschwindigkeit von < 10 %/s, insbesondere von < 5 %/s, wobei ein möglichst großer Teil der Relaxation bei Temperaturen < 233 °C, besser sogar bei Temperaturen < 210 °C stattfinden sollte. Als besonders günstig hat es sich erwiesen, wenn mindestens 0,7 % der Relaxation bei Temperaturen < 210 °C stattfinden. Hohe Relaxationsgeschwindigkeiten und hohe Relaxationstemperaturen führen zu einer geringeren Reduktion des Querschrumpfes bei gleichzeitiger deutlicher Reduktion des Längsschrumpfes, was aus den erwähnten Gründen ungünstig ist. Anschließend wird die Folie abgekühlt und aufgewickelt. Das hier beschriebene Verfahren zur Herstellung von Polyesterfolien mit reduziertem Querschrumpf ist nicht nur auf Polyester sondern auch auf andere thermoplastische Polymere anwendbar.

Nachfolgend ist die Erfindung anhand von Beispielen näher erläutert.

**Beispiele**

Zur Charakterisierung der erhaltenen Folien dienten die folgenden Meßmethoden:

**Schrumpf**

Der Thermische Schrumpf wurde an 10 cm großen Quadraten bestimmt. Die Proben ($L_0$) werden genau ausgemessen und 15 Minuten in einem Umlufttrockenschrank bei der jeweils angegebenen Temperatur getempert. Die Proben (L) werden entnommen und bei Raumtemperatur genau ausgemessen.

$$Schrumpf\ (\%) = \frac{L_0 - L}{L_0} \cdot 100$$

**Anfangstemperatur des Schrumpfes**

Zur Bestimmung der Temperatur $T_S$, bei der der Schrumpf der Folie beginnt, wird die TMA-Analyse mit einem Gerät der Fa. Mettler durchgeführt. Die 10 mm x 6 mm großen Proben werden bei einer Heizrate von 10 K/min und einer Kraft von 5 mN gemessen.

**Schrumpfkraft**

Die Schrumpfkraft in Abhängigkeit der Temperatur wird mittels thermomechanischer Analyse mit dem Geräte Thermofil-M durchgeführt. Die 100x8 mm großen Proben werden bei einer Heizrate von 10 K/min und einer Vorspannkraft von 2 cN gemessen.

**Folienfixierpeak**

Der Folienfixierpeak wird mittels DSC-Analyse mit einem Geräte der Fa. Du Pont ermittelt. Beim ersten Aufheizen bei einer Heizrate von 20 K/min tritt ein endothermer Peak auf.

**Dichte**

Dichten werden in Übereinstimmung mit ASTM D 1505-68 durch Eintauchen von Proben in Dichtegradientensäulen bestimmt. Zur Herstellung von der Dichtegradientensäule werden Gemische aus $CCl_4$/Heptan verwendet.

**Beispiel 1**

PET-Chips wurden bei 160 °C getrocknet und bei 280 bis 310 °C extrudiert. Das geschmolzene Polymer wurde aus einer Düse über eine Abzugswalze abgezogen. Der verstreckte Film wurde um den Faktor 3,8 in Maschinenrichtung bei 115 °C gestreckt. In einem Rahmen erfolgte bei 120 °C eine Querstreckung um den Faktor 4,0. Anschließend wurde die Folie thermofixiert, der ermittelte Folienfixierpeak lag bei 226 °C. Die Folie wurde in gleichmäßigen Schritten in Querrichtung 6 % mit einer Relaxationsgeschwindigkeit von 2,2 %/s relaxiert.

**Vergleichsbeispiel 1**

Eine biaxial orientierte Folie wurde wie in Beispiel 1 beschrieben hergestellt, mit dem Unterschied, daß die Folie bei 210 °C (= Folienfixierpeak) thermofixiert wurde.

**Vergleichsbeispiel 2**

Eine biaxial orientierte Folie wurde wie in Beispiel 1 beschrieben hergestellt, jedoch ohne Relaxation der Folie in Querrichtung.

**Vergleichsbeispiel 3**

Eine biaxial orientierte Folie wurde wie in Beispiel 1 beschrieben hergestellt, jedoch wurde die Folie in Querrichtung mit 2,5 % relaxiert.

**Beispiel 2**

Eine biaxial orientierte Folie wurde wie in Beispiel 1 beschrieben hergestellt, der ermittelte Folienfixierpeak lag jedoch diesmal bei 242 °C und die Folie wurde in Querrichtung 11 % relaxiert.

**Vergleichsbeispiel 4**

Eine biaxial orientierte Folie wurde wie in Beispiel 1 beschrieben hergestellt, jedoch ohne Relaxation der Folie in Querrichtung.

**Vergleichsbeispiel 5**

Eine biaxial orientierte Folie wurde wie in Beispiel 1 beschrieben hergestellt, jedoch wurde die Folie in Querrichtung 2,5 % relaxiert.

in Tabelle 1 sind die Eigenschaften der Folien aus den Beispielen zusammengefaßt.

## Tabelle 1

| Folientyp | Dichte g/cm³ | S 180 (MD) [1] % | Ts (TD) C | S 200 (TD) % | S 200 (MD) % | S 220/ S 160 | Lötbadbeständigkeit des Kondensators |
|---|---|---|---|---|---|---|---|
| Beispiel 1 | 1,4007 | 2,4 | 185 | 1,4 | 4,0 | 13,3 | 0 |
| Beispiel 2 | 1,4032 | 1,9 | 200 | -0,1 | 2,8 | 5,2 | 0 |
| Vergleichsbeispiel 1 | 1,4003 | 2,6 | 160 | 1,8 | 6,2 | 3,8 | X |
| Vergleichsbeispiel 2 | 1,4009 | 2,4 | 95 | 7,6 | 3,8 | 1,4 | X |
| Vergleichsbeispiel 3 | 1,4007 | 2,6 | 95 | 4,1 | 5,5 | 2,9 | X |
| Vergleichsbeispiel 4 | 1,4039 | 1,8 | 100 | 6,8 | 2,6 | 1,6 | X |
| Vergleichsbeispiel 5 | 1,4033 | 1,9 | 105 | 3,6 | 2,7 | 2,8 | X |
| Vergleichsbeispiel EP-A-0 402 861 | 1,4067 | 0,7 | 235 | -0,8 | 1,3 | 1,9 | X |

[1]      Temperzeit 30 min

**EP 0 929 599 B1**

**Patentansprüche**

1. Ein- oder mehrschichtige biaxial orientierte Polyesterfolie mit einer Dicke von ≤ 12 μm, wobei

| | |
|---|---|
| $T_S$ (TD) | ≥ 160 °C |
| S 200 (TD) | ≤ 5 % |
| S 200 (MD) | 2-5 % |
| Schrumpfkräfteverhältnis $\frac{N_S 220}{N_S 160}$ | ≥ 4,5 |
| Folienfixierpeak | ≥ 210 °C |
| Foliendichte | 1,39-1,41 g/cm³ ist |

und $T_S$(TD) die Temperatur ist, bei der der Querschrumpf beginnt, S 200 (TD) der Schrumpf in Querrichtung (in %) bei 200 °C ist, S 200 (MD) der Schrumpf in Maschinenrichtung (in %) bei 200 °C ist, $N_S$ 220 die Schrumpfkraft (in N) bei 220 °C ist und $N_S$ 160 die Schrumpfkraft (in N) bei 160 °C in Querrichtung ist.

2. PET-Folie nach Anspruch 1, **dadurch gekennzeichnet, daß** S 220 (TD) ≤3 % ist.

3. PET-Folie nach Anspruch 1, **dadurch gekennzeichnet, daß** S 220 (TD) ≤2 % ist.

4. PET-Folie nach einem oder mehreren der Ansprüche 1 bis 3, **dadurch gekennzeichnet, daß** der Folienfixierpeak bei ≥ 215 °C liegt.

5. PET-Folie nach einem oder mehreren der Ansprüche 1 bis 3, **dadurch gekennzeichnet, daß** der Folienfixierpeak bei ≥ 220 °C liegt.

6. Verfahren zur Herstellung einer PET-Folie, wobei eine aufgeschmolzene PET-Schmelze auf eine Kühlwalze extrudiert und anschließend sequentiell in Längs- und dann in Querrichtung oder in Quer- und dann in Längsrichtung oder simultan in Längs- und in Querrichtung gestreckt und gegebenenfalls daran anschließend nochmals in Längs- und/oder Querrichtung gestreckt wird und anschließend bei 200 bis 260 °C thermofixiert wird, wobei die Folie während der Thermofixierung mit einer Relaxationsgeschwindigkeit von < 20 %/s um 5 bis 15 % relaxiert wird und wobei die Folie während des Herstellprozesses ein maximales Temperaturerlebnis von ≥ 210 °C (gemessen mittels DSC-Analyse an der fertigen Folie) erfährt.

7. Verfahren nach Anspruch 6, **dadurch gekennzeichnet, dass** die Relaxationsgeschwindigkeit < 10 %/s ist.

8. Verfahren nach Anspruch 6 oder 7, **dadurch gekennzeichnet, dass** die Relaxationsgeschwindigkeit < 5 %/s ist.

9. Verwendung einer Folie nach Anspruch 1 zur Herstellung von Kondensatoren.

10. Verwendung nach Anspruch 9 zur Herstellung von Kondensatoren für die SMD-Technik.

**Claims**

1. A single-layer or multilayer biaxially oriented polyester film having a thickness of ≤ 12 μm, where

| | |
|---|---|
| $T_s$ (TD) is | ≥ 160°C |
| S 200 (TD) is | ≤ 5% |
| S 200 (MD) is | 2% - 5% |
| Shrinkage force ratio $\frac{N_s 220}{N_s 160}$ is | ≥ 4.5 |
| Film setting peak is | ≥ 210°C |
| Film density is | 1.39 - 1.41 g/cm³ |

and $T_s$ (TD) is the temperature at which the transverse shrinkage begins, S 200 (TD) is the shrinkage in the transverse direction (in %) at 200°C, S 200 (MD) is the shrinkage in the machine direction (in %) at 200°C, $N_s$ 220 is the shrinkage force (in N) at 220°C and $N_s$ 160 is the shrinkage force (in N) at 160°C in the transverse direction.

**2.** The PET film as claimed in claim 1, wherein S 200 (TD) is ≤ 3%.

**3.** The PET film as claimed in claim 1, wherein S 200 (TD) is ≤ 2%.

**4.** The PET film as claimed in one or more of claims 1 to 3, wherein the film setting peak is ≥ 215°C.

**5.** The PET film as claimed in one or more of claims 1 to 3, wherein the film setting peak is ≥ 220°C.

**6.** A process for the production of a PET film, wherein a molten PET melt is extruded onto a chill roll and then stretched sequentially in the longitudinal and then in the transverse direction or in the transverse and then in the longitudinal direction or simultaneously in the longitudinal and in the transverse direction and is optionally stretched then once again in the longitudinal and/or transverse direction and is then heat-set at 200 to 260°C, the film being relaxed by 5 to 15% at a relaxation rate of < 20%/s during the heat-setting and the film experiencing a maximum temperature of ≥ 210°C (measured by means of DSC analysis on the finished film) during the production process.

**7.** The process as claimed in claim 6, wherein the relaxation rate is < 10%/s.

**8.** The process as claimed in claim 6 or 7, wherein the relaxation rate is < 5%/s.

**9.** The use of a film as claimed in claim 1 for the production of capacitors.

**10.** The use as claimed in claim 9 for the production of capacitors for SMD technology.

**Revendications**

**1.** Feuille en polyester biaxialement orientée, mono ou multicouche, avec une épaisseur ≤ 12 μm, où :

| | |
|---|---|
| Ts (TD) | ≥ 160°C |
| S200 (TD) | ≤ 5% |
| S200 (MD) | 2%-5% |
| Rapport des forces de retrait $N_S 220/ N_S 160$ | ≥ 4,5 |
| Pic de fixation de la feuille | ≥ 210°C |
| Masse spécifique de la feuille | 1,39-1,41 g/cm$^3$ |

où Ts(TD) est la température à laquelle le retrait transversal commence, S200(TD) est le retrait (en %) à 200°C en direction transversale, S200(MD) est le retrait à 200°C dans la direction de la machine (en %), $N_S 220$, la force de retrait (en N) à 220°C et $N_S 160$, la force de retrait (en N) à 160°C dans la direction transversale.

**2.** Feuille en PET suivant la revendication 1,
**caractérisée en ce que** S220(TD) est ≤ 3%.

**3.** Feuille en PET suivant la revendication 1,
**caractérisée en ce que** S220(TD) est ≤ 2%.

**4.** Feuille en PET suivant l'une ou plusieurs des revendications 1 à 3, **caractérisée en ce que** le pic de fixation de la feuille se situe à ≥ 215°C.

**5.** Feuille en PET suivant l'une ou plusieurs des revendications 1 à 3, **caractérisée en ce que** le pic de fixation de la feuille se situe à ≥ 220°C.

**6.** Procédé de préparation d'une feuille en PET, où la masse PET fondue est extrudée sur un rouleau froid et ensuite séquentiellement étirée dans les directions longitudinale et transversale ou dans les directions transversale et longitudinale, ou simultanément dans les directions longitudinale et transversale et facultativement ensuite à nouveau en direction longitudinale et/ou transversale, et ensuite, recuite entre 200 et 260°C, où la feuille est relaxée pendant le recuit, à une vitesse de relaxation < 20%/seconde de 5 à 15% et où la feuille subit pendant le procédé de préparation, une température maximale effective de ≥ 210°C (mesurée par l'analyse DSC sur la feuille terminée).

**7.** Procédé suivant la revendication 6, **caractérisé en ce que** la vitesse de relaxation est < 10%/seconde.

**8.** Procédé suivant la revendication 6 ou 7, **caractérisé en ce que** la vitesse de relaxation est < 5%/seconde.

**9.** Utilisation d'une feuille suivant la revendication 1, pour préparer des condensateurs.

**10.** Utilisation suivant la revendication 9, pour préparer des condensateurs pour la technique du montage en surface.